# EUROPEAN PATENT SPECIFICATION

(11) **EP 2 572 532 B1**
(45) Date of publication and mention of the grant of the patent: **16.01.2019**
(21) Application number: 10851574.3
(22) Date of filing: 19.05.2010
(51) Int. Cl.: H04W 36/00

(54) **MULTI-BAND HANDOVER VIA AN ADAPTIVE HANDOVER THRESHOLD**
MEHRBANDÜBERGABE ÜBER EINE ADAPTIVE ÜBERGABESCHWELLE
TRANSFERT INTERCELLULAIRE MULTIBANDE VIA UN SEUIL DE TRANSFERT INTERCELLULAIRE ADAPTATIF

(43) Date of publication of application: 27.03.2013
(73) Proprietor: Huawei Technologies Co., Ltd., Longgang District Shenzhen, Guangdong 518129 (CN)
(72) Inventor: LIN, Jie, Basingstoke Hampshire RG22 4BS UK (GB)
(74) Representative: Pfenning, Meinig & Partner mbB
(86) International application number: PCT/CN2010/072911
(87) International publication number: WO 2011/143815

(56) References cited:
- EP-A1- 1 998 577
- CN-A- 1 300 482
- CN-A- 1 698 321
- CN-A- 101 449 500
- US-A1- 2008 081 624

## Description

### BACKGROUND OF THE INVENTION

The present invention relates to a handover operation in a multi-band communication arrangement.

As more and more spectrums are being made available for MBB due to e.g. 2G reforming or the 2.6G technology, there is increasing possibility that a single MBB technology such as e.g. HSPA+ or LTE (HSPA: High Speed Packet Access, LTE: Long Term Evolution) may operate on different frequency bands. From standard point of view, different frequency bands may be treated as different carriers. However, the existing handover mechanisms do not differentiate from different frequency bands so that a coverage nature of individual frequency bands under different radio conditions may not be recognized.

US 2008/081624 A1 discloses a method and apparatus adapted to adjust threshold values for initiating HO measurements based on terminal or user equipment (UE) performance. The threshold values for initiating the HO measurements and for executing the HO may be determined by the network. Prior to determining whether to proceed with these procedures, the thresholds are adjusted, based on the actual UE performance. This adjustment is achieved by applying an offset in dB that captures the effective SIR improvement of the advanced receiver compared to the standard receiver used to set the thresholds. The offset depends on, among other things, the receiver type used, the number of receiver antennas, the multi-path channel profile, the number of active radio links, and the services/connection modes that are currently active in the UE.

EP 1998577 A1 discloses a mobile station, which is designed to send or receive at least a control channel using a given frequency in a first operating mode and to tune to a frequency different from the given frequency and perform a neighboring cell search in a second operating mode. The mobile station includes a measuring unit configured to obtain a measurement of radio channel quality at a measurement interval; and a determining unit configured to compare the measurement and a threshold and to select one of the first operating mode and the second operating mode based on the result of comparison. The mobile station allows a base station to recognize the operating mode of the mobile station either by preventing reporting of the measurement lower than the threshold to the base station or by transmitting a signal indicating the selected operating mode to the base station.

### SUMMARY OF THE INVENTION

A goal to be achieved by the present invention, which is realized in the claims, is to provide an efficient handover mechanism in a multi-band communication arrangement which supports a prioritized use of frequency bands according to different radio conditions.

The invention is based on the finding that an efficient handover mechanism can be provided by introducing an offset to a handover threshold in particular with respect to a shared coverage area between e.g. high and low frequency bands within a communication cell, in order to create a means of prioritizing over frequency bands when e.g. making a handover decision. Thus, the handover threshold may adaptively be adjusted, wherein a feedback loop may be provided in order to take the current, resulting handover threshold and the current communication conditions into account. By way of example, the feedback loop may be used in the shared coverage area between high and low bands in order to ensure adjustments of the offsets may lead to an increase in the overall throughputs of the multifrequency band arrangement, i.e. cluster, supported by a communication cell. By way of example, e.g. communication resources of e.g. the UMTS 900 MHz technology, which may be considered as having a better building penetration than the UMTS 2.1 GHz technology, may be saved for indoor users or for users which are located at a cell edge (UMTS: Universal Mobile Telecommunications System).

According to a first aspect, the invention relates to a method for adapting a handover threshold for a handover between a first frequency band and a second frequency band of a multi-band communication arrangement to communication conditions such as different radio conditions in a communication cell. The method comprises determining a cell throughput of the communication cell, and amending a handover offset of the handover threshold depending on the cell throughput.

By way of example, the handover may be threshold-based, wherein the threshold enables taking e.g. a cell capacity at the respective frequency band or different service scenarios into account. According to the invention, the handover threshold is provided with an additional offset which allows for a quick adaptation of the handover threshold to e.g. current communication conditions when e.g. deciding whether to handover to e.g. the first frequency band or not.
By way of example, the first frequency band may be a lower frequency band than the second frequency band. Furthermore, the first frequency band may be a frequency band of the UMTS 900 MHz technology, wherein the second frequency band may be a frequency band of the UMTS 2.1 GHz technology.

According to an implementation form of the first aspect, the step of amending comprises increasing or reducing the handover offset by an offset amount. The offset amount may be static or non-static in order to take different communication conditions into account.

According to an implementation form of the first aspect, a feedback loop is used to regulate the adaptation of handover threshold.

According to an implementation form of the first aspect, the step of amending comprises amending the handover offset by a predetermined offset amount. The offset amount may be pre-stored in a lookup-table, by way of example.

According to an implementation form of the first aspect, the step of amending comprises reducing the handover offset if the cell throughput is greater than or equal to a cell throughput at a previous time instant. The cell throughput at the previous time instant may correspond to the cell throughput which was calculated at a previous iteration step when iteratively executing the method for adapting the handover threshold.

According to an implementation from of the first aspect, the step of amending comprises reducing the handover offset if the cell throughput is greater than or equal to a maximum allowable throughput. The maximum allowable throughput may be either subject to standard constraints or may be OMC configurable.

According to an implementation form of the first aspect, the step of amending comprises increasing the handover offset if the cell throughput is smaller than or equal to a cell throughput at a previous time instant, e.g. at a previous iteration step.

According to an implementation form of the first aspect, the step of amending comprises increasing the handover offset if the cell throughput is smaller than or equal to a maximum allowable cell throughput. The maximum allowable cell throughput may correspond to that maximum allowable cell throughput mentioned above.

According to an implementation form of the first aspect, the cell throughput comprises a cell throughput in the first frequency band and a cell throughput in the second frequency band. Alternatively, the cell throughput comprises only the cell throughput in the first frequency band. Alternatively, the cell throughput comprises only the cell throughput in the second frequency band.

According to an implementation form of the first aspect, the step of determining the cell throughput comprises calculating the cell throughput, e.g. calculating the respective cell throughput as mentioned above. In order to calculate the cell throughput, e.g. a data rate may be calculated or determined.

According to an implementation form of the first aspect, the method comprises providing the handover threshold with the handover offset. The handover offset may depend on the respective communication technology being used for communicating in the respective first frequency band or second frequency band. Preferably, the handover offset is added to or subtracted from the handover threshold.

According to an implementation form of the first aspect, the method comprises detecting a new handover trigger. The new handover trigger may be detected upon e.g. a basis of a handover request requesting to handover from e.g. the second frequency band towards the first frequency band or vice versa by user equipment forming an embodiment of a user entity.

According to an implementation form of the first aspect, the method comprises determining whether the communication cell supports communications in the first frequency band and in the second frequency band. In this regard, the method may comprise determining whether the user entity is within a coverage area supporting communications e.g. in the second frequency band according to e.g. the 2.1G technology. Correspondingly, the method may comprise determining whether the user entity is in the coverage area according to e.g. the UMTS 900 MHz technology.

According to a second aspect, the invention relates to a method for performing a handover operation between a first frequency band and a second frequency band of a multi-band communication arrangement in the communication cell. The method comprises adapting the handover threshold according to the first aspect of the invention, and deciding whether to perform the handover upon the basis of the adopted handover threshold.

According to a third aspect, the invention relates to a network node which is configured to perform at least one of the methods of the first aspect or of the second aspect of the invention.

### BRIEF DESCRIPTION OF THE DRAWINGS

Further embodiments of the invention will be described with respect to the following figures, in which:
Fig. 1 shows a diagram of a method for adapting a handover threshold; and
Fig. 2 shows a diagram of a method for performing a handover.

### DETAILED DESCRIPTION OF EMBODIMENTS

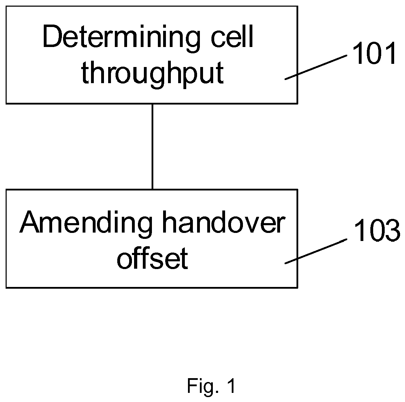

Fig. 1 shows a diagram of a method for adapting a handover threshold for handover between a first frequency band and a second frequency band. The method comprises determining 101 a cell throughput of a communication cell, and amending 103 a handover offset of the handover threshold in dependency on the cell throughput.
As depicted in Fig. 1, an intelligent handover scheme is provided in a shared coverage area between e.g. high frequency bands and low frequency bands such that the power budget for the lower band, e.g. the first frequency band, may be saved for the user equipment which may be located outside of the shared coverage area between the high frequency band and the low frequency band. Preferably, an inter-frequency band handover is distinguished from an inter-carrier handover since carriers in different frequency bands may be treated a different way as those in the same frequency band.

Furthermore, the actual downlink power consumption for the user equipment with respect to different frequency bands may be taken into account when varying the resulting handover threshold which comprises a traditional handover threshold and the variable handover offset.

In addition, according to some implementation forms, prioritization of use of frequency bands according to different radio conditions may be supported where communication is taking place. Thus, the best use of the UMTS 900 MHz spectrum or the UMTS 800 MHz spectrum by encouraging users near a cell centre to operate according to e.g. the 2.1G technology may yield saving the lower band for users indoor or at the cell edge. Furthermore, according to some implementations, the overall throughput of a multi-band arrangement may be improved by intelligent prioritizing a frequency band usage according to radio conditions.

According to some embodiments, one or more inputs to making a handover (HO) decision may be provided. By way of example, an offset to the HO threshold for the lower band in the shared coverage area with the higher band may be changed which may make possible to assert HO preference for different bands for the same technology. Furthermore, service types and loading at each band can also be taken into account.

According to some embodiments, an intelligent HO decision may be made. In this regard, the HO mechanism may remain the same as before for all frequency bands. The intelligent HO decision may be realised by adding an offset to the HO threshold when operating in the shared coverage area between the high and low bands.

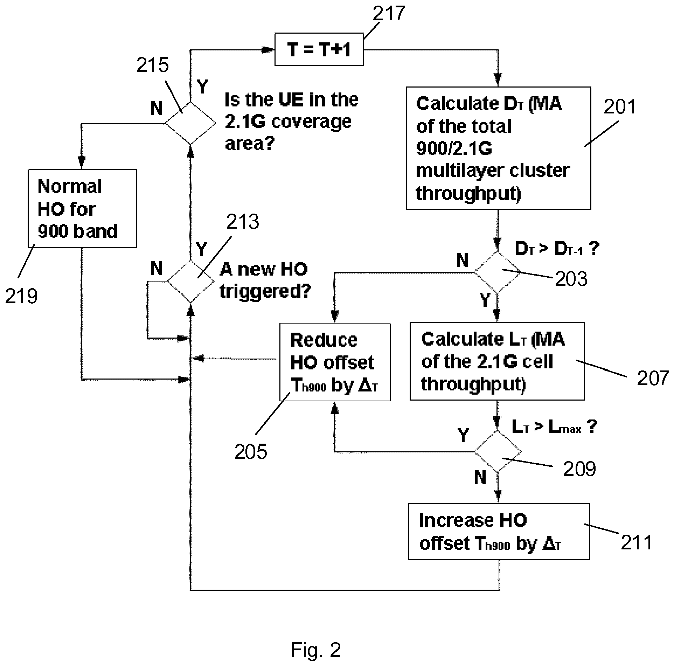

According to some embodiments, the handover offset may be controlled via a feedback loop as shown in Fig. 2 which takes into account the effect on overall throughput and loading situation. As to the feedback loop, the following inputs and control may be used to constitute the feedback loop in the shared coverage area between high and low frequency bands:
Input 1: Outcome of HO threshold evaluation for each band,
Input 2: Overall throughput of the mullti-layer cell site (e.g. for 900/2.1G or 800/2.6G technologies),
Input 3: Loading situation at each frequency band,
Control: Regulating an offset to each HO threshold such that the overall multi-layer cell throughput is maximized.

The feedback loop may enable an iterative system adaptation of the threshold to communication conditions. The stability and performance of the resulting feedback system may be affected by the incremental steps applied to the handover threshold and/or by a filter length of a moving average filter which may be applied to the overall cell throughput.

Fig. 2 shows a diagram of a method for performing a handover between a first frequency band and a second frequency band. The method comprises determining 201 a cell throughput of a communication cell which determines a coverage area by e.g. calculating a moving average, D_{T}, of the first frequency band and of the second frequency band of the multilayer cluster forming an embodiment of a multi-band communication arrangement. The first frequency band may be determined by the UMTS 900 MHz technology, whereas the second frequency band may correspond to the frequency band according to the 2.1G technology.

In step 203, the cell throughput is compared with a previously calculated cell throughput, D_{T - 1}. If the cell throughput is greater than or equal to the previous cell throughput, then, in step 205, the handover offset Tₕ₉₀₀ is reduced by a predetermined offset amount Δ_{T}. Otherwise, in step 207, a cell throughput at e.g. the second frequency band may be determined by calculating e.g. a moving average, L_{T}, of the second frequency band cell throughput at the time instant T. In step 209, the cell throughput calculated in step 207 is compared to a maximum allowable cell throughput L_{Max} which may be a 2.1G cell throughput being configurable from the OMC. If L_{T} is greater than or equal to L_{Max} then the method proceeds with the step of reducing 205 the handover offset. Otherwise, in step 211, the handover offset is increased by Δ_{T}. Thereafter, the method proceeds with the step of determining 213 as to whether a new handover is triggered. If a new handover is triggered then the method may proceed with the step of determining 215 whether a user entity (UE) is e.g. in the coverage area of the second frequency band, e.g. in the 2.1G coverage area. Otherwise, the method may remain in step 213.

If the communication cell supports communications in the second frequency band, then, starting from the step 215, a next iteration step is triggered in step 217. Otherwise, a normal handover for the first frequency band, e.g. for the lower 900 MHz band is performed in step 219.

According to some embodiments, Tₕ₉₀₀ may denote an offset to the HO threshold for 900M band in the shared coverage area (900/2.1G) with may default value configurable from the OMC.

According to some embodiments, D_{T} may denote a moving average of total 900/2.1G multi-layer cell throughput at T.

According to some embodiments, L_{T} may denote moving average of the 2.1G cell throughput at T.

According to some embodiments, L_{Max} may denote a maximum 2.1G cell throughput configurable from the OMC.

According to some embodiments, Δ_{T} may denote an incremental step for Tₕ₉₀₀ adjustment configurable from the OMC.
According to some embodiments, an optimum use of spectrum pairs like 900/2.1G, 800/2.6G and 900/2.6G may be enabled in the sense that maximum throughput can be achieved for the overall multi-band cell structure in a cluster.

According to some embodiments, more indoor traffic may be absorbed by saving the lower band for users deep indoor or at the cell edge.

According to some embodiments, the invention may also be applicable to both macro and micro layers deployed with 900/2.6G dual bands.

According to some embodiments, an open loop solution without the feedback loop as shown in Fig. 2 may be implemented.

According to some embodiments, the best use of lower frequency band of paired band configurations for either UMTS or LTE (900MHz/2.1GHz, 900MHz/2.6GHz, 800MHz/2.6GHz) may be achieved by encouraging users near cell centre to operate on the higher band saving the lower band for users indoor or at the cell edge.

According to some embodiments, prioritization over different frequency bands based on radio environment condition and relative cell position of the UE may be enabled.

According to some embodiments, frequency bands differentiation during an HO operation for either UMTS or LTE via the introduction of an offset to the HO threshold for the lower frequency band in the shared coverage area between high and low frequency bands may be facilitated.

According to some embodiments, a feedback loop may be introduced to control the adjustment of the HO offset in the shared coverage area between high and low frequency bands such that the overall through of the multi-band cluster is improved.

According to some embodiments, service types and loading condition of each frequency bands may taken into account in the algorithms implementing the inventive methods.

## Claims

1. Method for adapting a handover threshold for handover between a first frequency band and a second frequency band in a multi-band communication arrangement to communication conditions in a communication cell, the method comprising:
determining (101) a cell throughput of the communication cell in the first frequency band and the second frequency band; and
amending (103) a handover offset of the handover threshold in dependency on the cell throughput;
**characterized in that**
a feedback loop is used to regulate the adaptation of the handover threshold;
the method further comprising:
inputting outcome of handover threshold evaluation for each of the first frequency band and the second frequency band;
inputting overall throughput of the communication cell;
inputting service loading of the first frequency band and the second frequency band;
constituting the feedback loop in a shared coverage area between the first frequency band and the second frequency band based on at least one of the inputs; and
regulating an offset to each handover threshold such that the overall multi-layer cell throughput is maximized.

2. The method of claim 1, wherein the step of amending (103) comprises increasing or reducing the handover offset by an offset amount.

3. The method of any one of the preceding claims, wherein the step of amending (103) comprises amending the handover offset by a predetermined offset amount.

4. The method of any one of the preceding claims, wherein the step of amending (103) comprises reducing the handover offset if the cell throughput is greater than or equal to a cell throughput at a previous time instant.

5. The method of any one of the preceding claims, wherein the step of amending (103) comprises reducing the handover offset if the cell throughput is greater than or equal to a maximum allowable cell throughput.

6. The method of anyone of the preceding claims, wherein the step of amending (103) comprises increasing the handover offset if the cell throughput is smaller than or equal to a cell throughput at a previous time instant.

7. The method of any one of the preceding claims, wherein the step of amending (103) comprises increasing the handover offset if the cell throughput is smaller than or equal to a maximum allowable cell throughput.

8. The method of any one of the preceding claims, wherein the step of determining (101) comprises calculating the cell throughput and calculating an average, in particular a moving average, of the cell throughput.

9. The method according to any one of the preceding claims, further comprising detecting a new handover request triggering the updating the handover threshold.

10. The method of any one of the preceding claims comprising determining whether the communication cell supports communications in the first frequency band and in the second frequency band.

11. Method for performing a handover between a first frequency band and a second frequency band of a multi-band communication arrangement to communication conditions in a communication cell, the method comprising
adapting a handover threshold of the handover according to the method of any one of the claims 1 to 10; and
deciding whether to perform the handover upon the basis of the adapted threshold.

12. Communication node being configured to perform the method of any one of the claims 1 to 11.

## Patentansprüche

1. Verfahren zum Anpassen einer Übergabeschwelle für die Übergabe zwischen einem ersten Frequenzband und einem zweiten Frequenzband in einer Mehrbandkommunikationsanordnung zum Kommunizieren von Kommunikationsbedingungen in einer Kommunikationszelle, das Verfahren umfassend:
Bestimmen (101) eines Zellendurchsatzes der Kommunikationszelle in dem ersten Frequenzband und dem zweiten Frequenzband; und
Ändern (103) eines Übergabeversatzes der Übergabeschwelle in Abhängigkeit von dem Zellendurchsatz;
**dadurch gekennzeichnet, dass**
eine Feedbackschleife verwendet wird, um die Anpassung der Übergabeschwelle zu regeln;
das Verfahren ferner umfassend:
Eingeben des Ergebnisses der Übergabeschwellenbewertung für jedes von dem ersten Frequenzband und dem zweiten Frequenzband;
Eingabe des Gesamtdurchsatzes der Kommunikationszelle;
Eingabe einer Dienstlast des ersten Frequenzbandes und des zweiten Frequenzbandes;
Bilden der Feedbackschleife in einem gemeinsamen Abdeckungsbereich zwischen dem ersten Frequenzband und dem zweiten Frequenzband basierend auf mindestens einer der Eingaben; und
Regeln eines Versatzes für jeden Übergabeschwellenwert, sodass der gesamte Mehrschichtzellendurchsatz maximiert wird.

2. Verfahren nach Anspruch 1, wobei der Schritt des Änderns (103) das Erhöhen oder Verringern des Übergabeversatzes um einen Versatzwert umfasst.

3. Verfahren nach einem der vorhergehenden Ansprüche, wobei der Schritt des Änderns (103) das Ändern des Übergabeversatzes um einen vorbestimmten Versatzwert umfasst.

4. Verfahren nach einem der vorhergehenden Ansprüche, wobei der Schritt des Änderns (103) das Verringern des Übergabeversatzes umfasst, wenn der Zellendurchsatz größer oder gleich einem Zellendurchsatz zu einem vorherigen Zeitpunkt ist.

5. Verfahren nach einem der vorhergehenden Ansprüche, wobei der Schritt des Änderns (103) das Verringern des Übergabeversatzes umfasst, wenn der Zellendurchsatz größer oder gleich einem maximal zulässigen Zellendurchsatz ist.

6. Verfahren nach einem der vorhergehenden Ansprüche, wobei der Schritt des Änderns (103) das Erhöhen des Übergabeversatzes umfasst, wenn der Zelldurchsatz kleiner oder gleich einem Zelldurchsatz zu einem vorherigen Zeitpunkt ist.

7. Verfahren nach einem der vorhergehenden Ansprüche, wobei der Schritt des Änderns (103) das Erhöhen des Übergabeversatzes umfasst, wenn der Zellendurchsatz kleiner oder gleich einem maximal zulässigen Zellendurchsatz ist.

8. Verfahren nach einem der vorhergehenden Ansprüche, wobei der Schritt des Bestimmens (101) das Berechnen des Zellendurchsatzes und das Berechnen eines Mittelwerts, insbesondere eines gleitenden Mittelwerts, des Zellendurchsatzes umfasst.

9. Verfahren nach einem der vorhergehenden Ansprüche, ferner umfassend das Erkennen einer neuen Übergabeanforderung, die das Aktualisieren der Übergabeschwelle auslöst.

10. Verfahren nach einem der vorhergehenden Ansprüche, umfassend das Bestimmen, ob die Kommunikationszelle Kommunikationen in dem ersten Frequenzband und in dem zweiten Frequenzband unterstützt.

11. Verfahren zum Durchführen einer Übergabe zwischen einem ersten Frequenzband und einem zweiten Frequenzband einer Mehrbandkommunikationsanordnung zum Kommunizieren von Kommunikationsbedingungen in einer Kommunikationszelle, das Verfahren umfassend
Anpassen einer Übergabeschwelle der Übergabe gemäß dem Verfahren nach einem der Ansprüche 1 bis 10; und
Entscheiden, ob die Übergabe auf der Grundlage der angepassten Schwelle durchgeführt werden soll.

12. Kommunikationsknoten, der konfiguriert ist, um das Verfahren nach einem der Ansprüche 1 bis 11 durchzuführen.

## Revendications

1. Procédé d'adaptation d'un seuil de transfert intercellulaire pour un transfert intercellulaire entre une première bande de fréquences et une seconde bande de fréquences dans un agencement de communication à bandes multiples des conditions de communication dans une cellule de communication, le procédé comprenant :
la détermination (101) du débit de cellule de la cellule de communication dans la première bande de fréquences et la seconde bande de fréquences ; et
la modification (103) d'un décalage du transfert intercellulaire du seuil de transfert intercellulaire en fonction du débit de la cellule ;
**caractérisé en ce que**
une boucle de contre-réaction est utilisée pour réguler l'adaptation du seuil de transfert intercellulaire ;
le procédé comprenant en outre :
la saisie du résultat de l'évaluation du seuil de transfert intercellulaire pour chacune des première et seconde bandes de fréquences ;
la saisie du débit global de la cellule de communication ;
la saisie du chargement de service de la première bande de fréquences et de la seconde bande de fréquences ;
l'établissement de la boucle de contre-réaction dans une zone de couverture partagée entre la première bande de fréquences et la seconde bande de fréquences sur la base d'au moins une des saisies ; et
la régulation d'un décalage à chaque seuil de transfert intercellulaire de sorte que le débit de l'ensemble des cellules à couches multiples soit maximisé.

2. Procédé selon la revendication 1, dans lequel l'étape de modification (103) comprend l'augmentation ou la réduction du décalage du transfert intercellulaire par une quantité de décalage.

3. Procédé selon l'une quelconque des revendications précédentes, dans lequel l'étape de modification (103) comprend la modification du décalage du transfert intercellulaire par une quantité de décalage prédéterminée.

4. Procédé selon l'une quelconque des revendications précédentes, dans lequel l'étape de modification (103) comprend la réduction du décalage de transfert intercellulaire si le débit de la cellule est supérieur ou égal à un débit de la cellule à un instant précédent.

5. Procédé selon l'une quelconque des revendications précédentes, dans lequel l'étape de modification (103) comprend la réduction du décalage de transfert intercellulaire si le débit de la cellule est supérieur ou égal à un débit de cellule maximal autorisé.

6. Procédé selon l'une quelconque des revendications précédentes, dans lequel l'étape de modification (103) comprend l'augmentation du décalage de transfert intercellulaire si le débit de la cellule est inférieur ou égal à un débit de la cellule à un instant précédent.

7. Procédé selon l'une quelconque des revendications précédentes, dans lequel l'étape de modification (103) comprend l'augmentation du décalage de transfert intercellulaire si le débit de la cellule est inférieur ou égal à un débit de cellule minimal autorisé.

8. Procédé selon l'une quelconque des revendications précédentes, dans lequel l'étape de détermination (101) comprend le calcul du débit des cellules et le calcul d'une moyenne, en particulier d'une moyenne glissante, du débit des cellules.

9. Procédé selon l'une quelconque des revendications précédentes, comprenant en outre la détection d'une nouvelle demande de transfert intercellulaire déclenchant la mise à jour du seuil de transfert intercellulaire.

10. Procédé selon l'une quelconque des revendications précédentes, comprenant la détermination du fait que la cellule de communication supporte ou non des communications dans la première bande de fréquences et dans la seconde bande de fréquences.

11. Procédé pour effectuer un transfert intercellulaire entre une première bande de fréquences et une seconde bande de fréquences dans un agencement de communication à bandes multiples des conditions de communication dans une cellule de communication, le procédé comprenant
l'adaptation d'un seuil de transfert du transfert intercellulaire selon le procédé de l'une quelconque des revendications 1 à 10 ; et
le fait de décider s'il faille ou non effectuer le transfert en fonction du seuil adapté.

12. Noeud de communication configuré pour exécuter le procédé selon l'une quelconque des revendications 1 à 11.
